# EUROPEAN PATENT APPLICATION

(11) **EP 1 052 506 A1**
(43) Date of publication of application: **15.11.2000**
(21) Application number: 99810424.4
(22) Date of filing: 12.05.1999
(51) Int. Cl.: G01N 30/82

(54) **Eluate collecting device, liquid chromatography apparatus equipped with said collecting device, and material detecting method using liquid chromatography**

(71) Applicant: F. HOFFMANN-LA ROCHE AG, 4002 Basel (CH); Yugen-Kaisha Yamazaki Seisakusho, Tokyo 124-0012 (JP)
(72) Inventor: The designation of the inventor has not yet been filed
(74) Representative: AMMANN PATENTANWAELTE AG BERN

(57) **Abstract**

An eluate collecting device (11) for pouring an eluate emerging from a chromatographic column capable of developing a sample solution onto a liquid receiving means (16) and for collecting said eluate. In order to search useful material more effectively by screening in a shorter time and with less labor, the eluate collecting device 11 is designed for pouring an eluate flowing out from a column filled with a stationary phase capable of developing a sample solution, onto a liquid receiving means (16) so as to collect the eluate thereon. This device includes a base (12) for supporting the liquid receiving means, a liquid outlet forming portion (21) for forming a liquid outlet (22a) above said base, said eluate being poured down through said liquid outlet (22a) toward the liquid receiving means (16), moving mechanisms (31 to 36 and 41 to 45) for moving the liquid outlet (22a) and the liquid receiving means (16) relative to each other, and a control means for moving the liquid outlet (22a) and the liquid receiving means (16) relative to each other at a predetermined speed by the moving mechanisms so as to vary the position of said eluate outlet (22a) relative to the liquid receiving means (16).

## Description

The invention concerns eluate collecting device for pouring an eluate emerging from a chromatographic column capable of developing a sample solution onto a liquid receiving means and for collecting said eluate.

The invention relates in particular to a separating and/or purifying device wherein liquid is used as an elution medium, for example an eluate collecting device in a liquid chromatograph.

The invention also concerns a liquid chromatograph.

The invention further concerns a material detecting method using a liquid chromatography.

More specifically, this invention relates to the art of successively pouring and collecting an eluate emerging from a chromatographic column capable of developing a sample solution onto a filter paper, a supporting plate (TLC plate) for a thin-layer chromatography (TLC) or an agar flat medium board and the like in a high performance liquid chromatography (HPLC), thereby detecting ingredients of a sample collected on the filter paper.

Liquid chromatography is a mixture separating technique which has been used for a long time. However, as compared with a gas chromatography, the speed of diffusion of molecules in a liquid is lower, and the time, required for the movement of materials, is longer, which results in the problem that high-speed separation is difficult. However, recently, with advanced techniques such as an improvement of filling materials and a pressure-resistant design of an apparatus, a high separation ability has been achieved, and such a separation technique is called "high performance liquid chromatography (HPLC)".

High performance liquid chromatography (HPLC) has now been extensively used, for example, 1) for separating ingredients of a sample and for determining the quantities thereof, 2) for separating ingredients of a sample and collecting said ingredients separately and for purifying the target ingredient, and 3) for identifying materials based on the eluate position and a separation pattern. HPLC enables such measurements with a less-costly construction of the apparatus as compared with other analyzing apparatuses, and it is therefore one of the most frequently-used analyzing means.

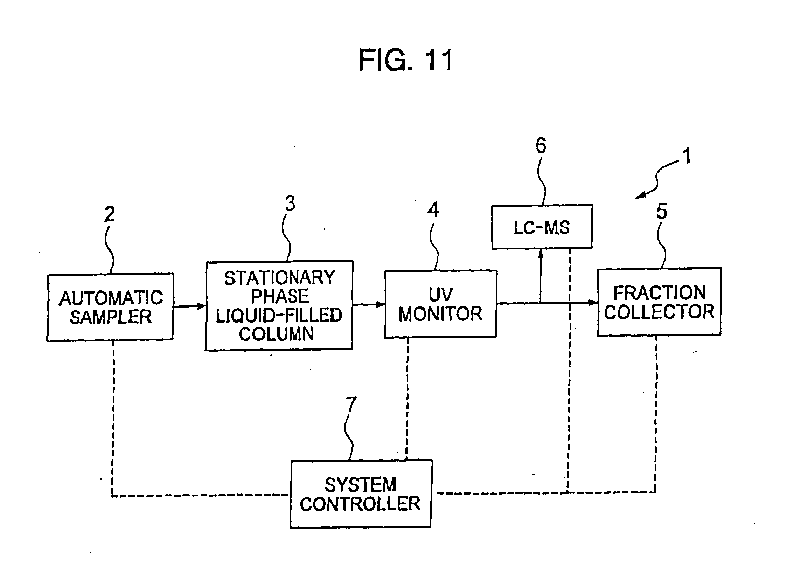

Fig. 11 shows a basic construction of a conventional HPLC apparatus. As shown in this Figure, generally, a HPLC apparatus 1 comprises a column 3 for separating ingredients (solutes) contained in a sample, an automatic sampler (sample injector) 2 for injecting a sample into a column 3, suitable detectors (an ultraviolet / visible absorption detector 4 and a mass spectrograph 6) for detecting ingredients of a liquid (eluate) flowing from a column 3, and a fraction collector 5 for collecting an eluate flowing out from a column 3. Column 3 is filled with a stationary phase suitably selected in accordance with the material to be detected, and the ingredients of the sample are separated while the sample passes through this stationary phase, and emerge sequentially from column 3. Portions 2 to 6 of the apparatus are controlled by a controller 7, and the series of operations from the injection of the sample into column 3 to the collection of the eluate can be effected automatically.

Incidentally, in order to find effective ingredients for pharmaceuticals and medicines among various samples, obtained from the natural world, and synthetic materials, there are occasions when such a liquid chromatography is used. For example, using an extract from a plant or a product, formed by microorganisms, as a sample, a novel, useful material, such as an antibacterial material, an antimycotic material, an antiviral material, a cell migration factor, a cell proliferation factor or a cell proliferation inhibiting factor, is searched for by screening.

However, a considerable amount of time and labor have heretofore been required for the screening of such a novel material, and this has been cumbersome. This is due to the fact that a solution of one sample is usually divided into 10 to 50 fractions by the fraction collector 5, and in order to evaluate the physiologic activity thereof, each of these fractions is dropped onto, for example, a filter paper disk, and then this filter paper disk is dried, and then is placed on a culture medium. Thus, a series of these operations must be carried out, and this is cumbersome even if the above-mentioned automatic processing apparatus 1 is used.

Moreover, an almost infinite number of samples to be analyzed are present in the natural world, and also various samples can be synthesized. Therefore, with a conventional liquid chromatography technique, very large amounts of time and labor are required for the test and evaluation of various samples and for large-scale screening e.g. for the purpose of finding novel, physiologically effective materials.

It is therefore an aim of this invention to provide a technique by which a desired novel, useful material can be effectively searched for by screening with less time and labor as compared with conventional techniques.

According to a first aspect of the invention, the above-mentioned aim is achieved in particular by means of an eluate collecting device for pouring an eluate emerging from a stationary phase capable of developing a sample solution onto a liquid receiving means and for collecting said eluate, said collecting device comprising
a base for supporting said liquid receiving means,
liquid outlet forming means for forming a liquid outlet above said base, through which said eluate being poured down towards said liquid receiving means,
moving means for moving said liquid outlet relative to said liquid receiving means, and
control means for moving said eluate outlet relative to said liquid receiving means at a predetermined speed by use of said moving means so as to vary the eluate outlet position relative to said liquid receiving means.

According to a second aspect of the invention, the above-mentioned aim is achieved in particular by means of a liquid chromatograph, comprising
a column filled with a stationary phase capable of developing a sample solution,
a sample solution injecting device for injecting a sample solution into said column,
detectors for detecting ingredients contained in the eluate flowing out from the column, and
an eluate collecting device according to the invention,
the eluate flowing out from the column being successively poured and collected onto the liquid receiving means while the collecting position is modified in function of time.

According to a third aspect of the invention, the above-mentioned aim is achieved in particular by means of a material detecting method using a liquid chromatography, this method comprising
injecting a sample solution into a stationary phase,
successively pouring and collecting an eluate flowing out from the stationary phase onto a liquid receiving means while the collecting position is modified in function of time, and
detecting ingredients contained in the sample solution on the basis of an eluate collected on said liquid receiving means.

According to the invention an eluate (a liquid flowing out from a stationary phase liquid-filled column) in a liquid chromatography is poured down and collected onto liquid receiving means, which form part of an eluate collection device according to the invention. This liquid receiving means is supported on a base. A liquid outlet is formed above the base by liquid outlet forming means, and the eluate flowing out from the column is poured downwards toward the liquid receiving means. The liquid receiving means may be of any type in so far as it extends two-dimensionally and can receive the eluate. For example, a sheet-like material, such as a filter paper, a supporting plate (a glass plate, plastic plate or metal plate etc.) for a thin-layer chromatography (TLC) or an agar flat medium board and the like can be used as liquid receiving means.

The liquid outlet forming means may comprise a pipe or a nozzle of such a construction that a liquid feed tube can be connected to one end thereof while an outlet port 22a (liquid outlet) for discharging the eluate is formed at the other end thereof. Another example of this means may comprise a clipper, a holder, a plate or an arm member (for holding a pipe or the like) which can directly hold the end portion (liquid outlet) of the liquid feed tube extending from the column. In short, any suitable means can be used in so far as it can form, above the base, a liquid outlet port 22a capable of pouring the eluate down toward the liquid receiving means.

The liquid outlet and the liquid receiving means can be moved relative to each other by a moving means controlled by control means. With this operation, the eluate from the column, can be collected sequentially while changing the collecting position on the liquid receiving means (for example, in accordance with the time position of eluate flowing out from the column). The pouring of the eluate onto the liquid receiving means can be effected continuously (in such continuous pouring, the eluate is collected in the form of a line on the liquid receiving means), but may also be effected discontinuously (intermittently or in a manner to form a line of dots).

In addition to the above liquid outlet for discharging the eluate, a similar liquid outlet portion can be provided on the eluate collecting device of the present invention, and this liquid outlet portion is moved, together with the liquid outlet, by the moving means. With this construction another solution (e.g. a standard solution) can be collected e.g. on a sheet simultaneously with the collection of the eluate (emerging from the column) on the liquid receiving means. In this case, the two can be compared with each other.

In this collecting device, the moving means can comprise first moving means for moving the liquid outlet in a first direction parallel to the base, and second moving means for moving the liquid outlet in a second direction perpendicular to the first direction. Under the control of the control means, the liquid outlet is moved in the first direction at a constant speed by the first moving means, and then is moved a predetermined distance in the second direction by the second moving means, and then the liquid outlet is again moved in the first direction at the constant speed by the first moving means.

By repeating this operation, a plurality of parallel collection lines can be formed on the liquid receiving means, and therefore the eluate can be collected, effectively using the limited area of the liquid receiving means. Moreover, since the liquid outlet is moved at the constant speed, the eluate collecting position (for example, the distance from the collection starting point on the liquid receiving means) corresponds to the point of time at which the eluate is collected on the liquid receiving means. Therefore, detection results of other detection devices (UV monitor, LC-MS and so on), as well as the fractions collected separately from each other by the fraction collector, can be easily put in corresponding relation.

Preferably, the base of the eluate collecting device comprises a base plate, which has a plurality of slits arranged at suitable intervals in parallel relation to the first direction, and a holder plate (pressing plate), which has a plurality of slits corresponding respectively to the first-mentioned slits of the base plate. In this case, the liquid receiving means is held between the two plates. Usually, a sheet (the liquid receiving means such as a filter paper), having an eluate absorbed therein, is corrugated into a wavy shape, or is partially raised when it is dried. With this construction of the base, however, such partially-raised (wavy) configuration is prevented, and the eluate can be accurately collected on a predetermined position (varying with time). In this case, the eluate is poured onto those portions of the sheet facing the slits, and therefore the liquid outlet is moved along the slit by the first moving means.

The eluate collecting device can further comprise raising-lowering means for vertically moving the liquid outlet toward and away from the base, and liquid absorbing means (e.g. filter paper, absorbent cotton, sponge or absorbent nonwoven fabric) for absorbing the eluate when the liquid outlet is located in a raised (upper) position apart from the base. With this construction, when continuously supplying from the column to the collecting device of the present invention, the eluate can be absorbed by the liquid absorbing means during the movement of the liquid outlet in the second direction by the second moving means, thus preventing the eluate from dropping, for example, onto the holder plate of the base.

Preferably, the collecting device further comprises air blow means (e.g. an air pump or a fan) for blowing the air onto that portion of the liquid receiving means on which the eluate has been collected. With this construction, the eluate collected on the liquid receiving means, can be rapidly dried, and the subsequent analysis processing (for example, the placing of the filter paper on a culture medium) can be carried out rapidly. In case of need of an aseptic operation, such air blowing by the air blow means is preferably performed through a sterile filter.

The liquid receiving means, having the eluate collected thereon, is used for detecting ingredients (solute) contained in the sample solution. If the liquid receiving means is placed on the culture medium in which a test microorganism, such as mold, yeast, Gram-positive bacteria and Gram-negative bacteria, can grow, a predetermined material, contained in the sample solution, can be detected based on the physiologic activity (grow inhibition activity) for the test microorganism. By measuring the diameter of the spots exhibiting such physiologic activity, the quantitative estimation of this material can be effected.

If the ingredients in the eluate is analyzed by various detection devices (e.g. an ultraviolet / visible absorption detector (UV monitor), a mass spectrograph (LC-MS), an infrared absorption detector, and a fluorescence detector) simultaneously with the collection of the eluate on the liquid receiving means, the identification (relative to the molecular weight and the structure) of the material with the desired physiologic activity, as well as the quantitative determination thereof, can be effected using these analysis results and the above mentioned physiologic activity.

Furthermore, an ultraviolet ray is applied directly to the liquid receiving means, and quenching spots appeared on the liquid receiving means are observed or the intensity of this ray is recorded through a phototube or a photocell, and by doing so, the detection and quantitative determination of the ingredients in the sample can be effected from the liquid receiving means having the eluate collected thereon.

Examples of samples to be analyzed include various sample solutions of various mixtures (e.g. extracts from plants and animals, materials formed by microorganism), artificially-formed compounds, and synthetic reaction products. On the other hand, examples of materials to be detected include various ingredients present in these samples, and examples of such ingredients include various natural organic compounds and various synthetic materials, such as amino acid, peptide, protein, saccharides, terpene, steroid, alkaloid, vitamin, hormone, carotinoid, nucleic acid, and antibiotic.

In this specification, the technique of separating ingredients, contained in a sample, is referred to as "chromatography", and an apparatus for performing this separation technique is referred to as "chromatograph".

A preferred embodiment of the present invention will now be described with reference to the accompanying drawings.
Fig. 1 is a schematic, perspective view showing one preferred embodiment of an eluate collecting device 11 according to the present invention;
Fig. 2 is an exploded, perspective view of a base 12 of the collecting device 11 shown by Fig. 1;
Fig. 3 is an enlarged, cross-sectional view of a portion of the base of the collecting device 11 shown by Fig. 1;
Fig. 4 is an enlarged, side-elevation view of an eluate outlet portion of the collecting device 11 shown by Fig. 1. Fig.4 shows the eluate outlet portion at an lower position thereof reached when the eluate outlet portion is moved downwards);
Fig. 5 is an enlarged, side-elevation view of an eluate outlet portion of the collecting device 11 shown by Fig. 1. Fig.5 shows the eluate outlet portion at an upper position thereof reached when the eluate outlet portion is moved upwards);
Fig. 6 is a block diagram showing a control portion of the collecting device 11 shown by Fig. 1;
Fig. 7 is a block diagram of one example of a high performance liquid chromatograph including the collecting device 11 shown by Fig. 1;
Fig. 8 is a view explanatory of a method of searching for a physiologic activity material by screening, using the collecting device 11 shown by Fig. 1;
Fig. 9 is a view explanatory of a method of searching for a physiologic activity material by screening, using the collecting device 11 shown by Fig. 1, and is a view showing the activity of grow inhibition for a test microorganism on a culture medium;
Fig. 10 is a view explanatory of a method of searching for a physiologic activity material by screening, using the collecting device 11 shown by Fig. 1, and is an illustration showing measurement data obtained by an UV monitor; and
Fig. 11 is a block diagram of a conventional, prior art high performance liquid chromatograph.

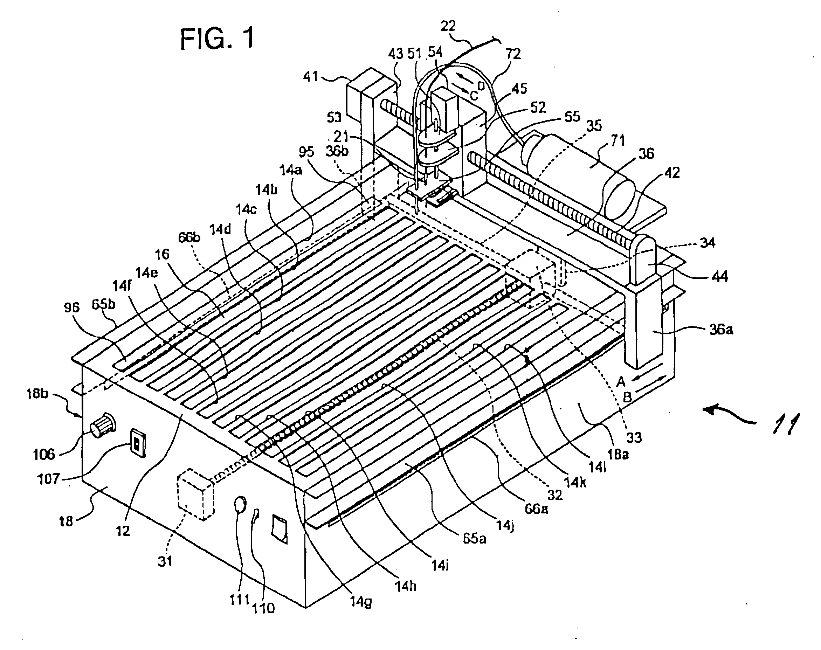

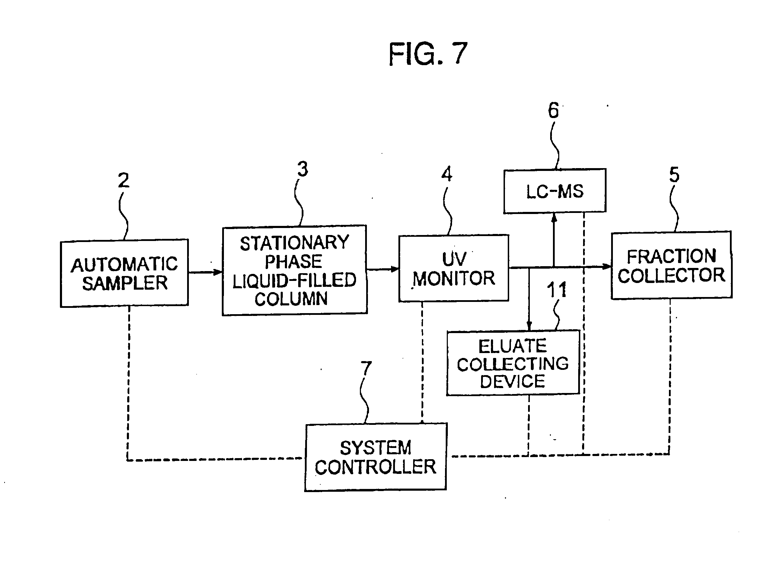

Figs. 1 to 6 show one example of an eluate collecting device 11 of the present invention. For example, and as shown by Fig. 7, this collecting device 11 can be connected to a high performance liquid chromatograph which comprises an automatic sampler 2, a chromatographic column 3, an UV monitor (ultraviolet / visible absorption detector) 4, a fraction collector 5, an LC-MS (mass spectrograph for liquid chromatography) 6, and a system controller 7.

Chromatographic column 3 is for instance a column bed composed by chromatographic carrier materials, such as Sepharose, cellulose, polymer gel such as polyacrylamide, and their derivatives, silica gel, and the like.

For example, about 1% to 2% of an eluate flowing out from column 3 can be branched, and is introduced into the collecting device 11, and is poured and collected onto a filter paper. To avoid repeated description, those portions of Fig. 7, corresponding respectively to those of the conventional prior art chromatograph shown by Fig 11, will be designated by identical reference numerals 2 to 7, respectively, and detailed description thereof will be omitted.

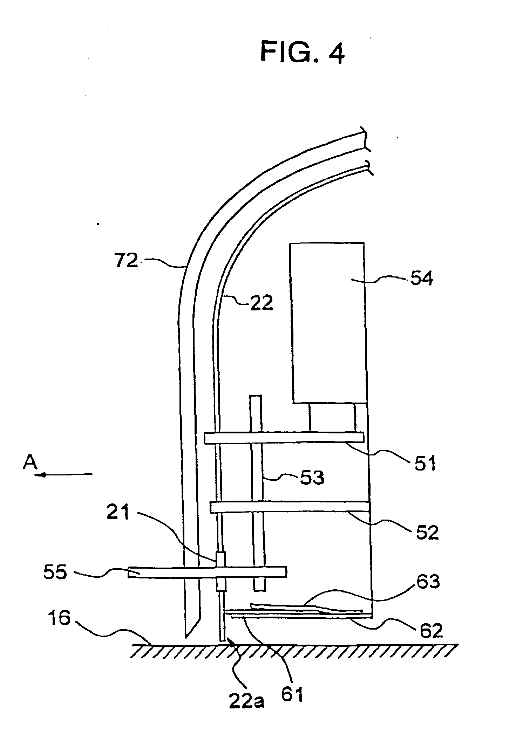

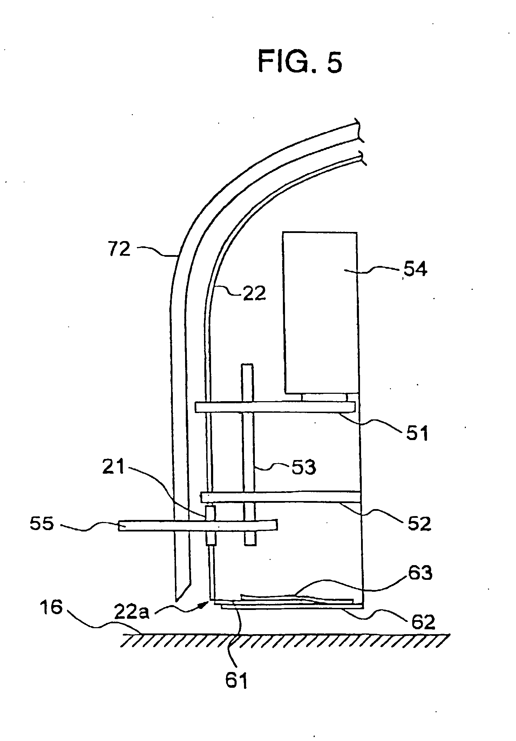

Referring to Figs. 1 to 5, the collecting device 11 of this embodiment comprises a base 12 provided at an upper surface of a device housing 18, and the filter paper 16 for collecting the eluate from the column 3 represented in Fig. 7 is supported by this base 12. A supporting pipe 21 for enabling flow of the eluate downwards towards the filter paper 16 is provided above the base 12 through a supporting plate 55, and a liquid feed tube 22, extending from the column 3 (through the UV monitor 4 represented in Fig. 7 ), passes through this pipe 21, and projects from a lower end of the pipe 21 as shown in Fig. 4 and Fig. 5 so that the eluate can flow down onto the filter paper 16.

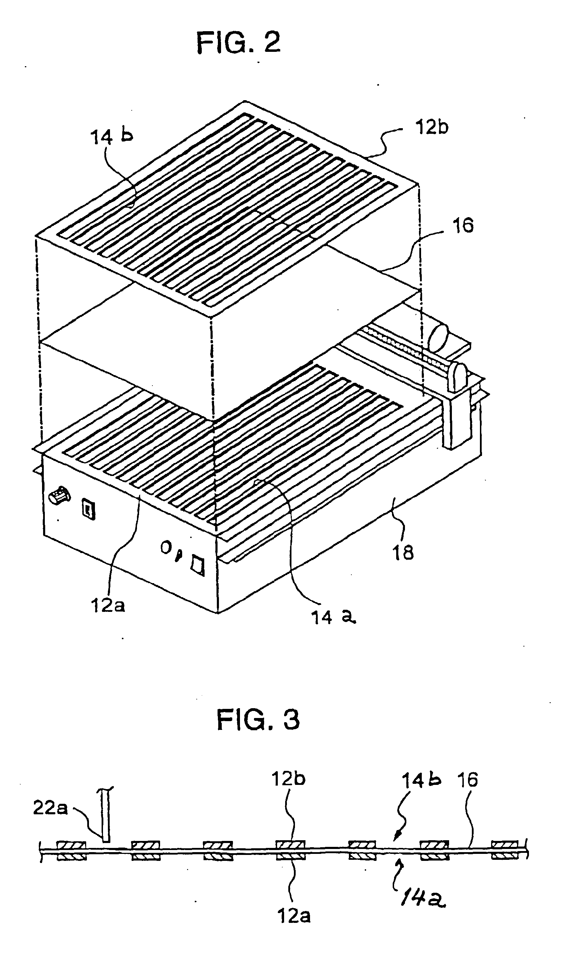

As shown by Fig.2, the base 12 comprises a base plate 12a for placing the filter paper 16 thereon, and a holder plate (pressing plate) 12b for being held against the upper side or surface of the filter paper 16, and the filter paper 16 is held between the two plates 12a and 12b. Each of the two plates 12a and 12b has a plurality of parallel slits 14a, respectively 14b, formed therethrough at suitable intervals. The eluate is poured to those portions of the filter paper 16 (held between the two plates 12a and 12b) facing the slits 14a, 14b and is collected on the filter paper 16. The slits 14a in the plate 12a and the slits 14b in the plate 12b are so arranged that the former slits 14a can be disposed in conformity with the latter slits 14b, respectively when the two plates 12a and 12b hold the filter paper 16 therebetween. As is clear from Fig. 3, those portions of the filter paper 16, facing the slits 14a, 14b, are supported in a floating manner in the air (that is, in an upper space of the device housing 18). With this support construction, the eluate poured onto the filter paper 16, can be dried in a shorter time. The holder plate 12b is openably mounted, for example, on a side edge portion of the device housing 18 or the base plate 12a by means of hinges (not shown).

The liquid feed tube 22 extends through two arm plates 51 and 52 vertically spaced from each other, and an upper portion of this tube 22 is fixedly secured to the upper arm plate 51 while an intermediate portion thereof slidably extends through the lower arm plate 52. A supporting plate 55 for supporting a lower portion of the liquid feed tube 22 is connected to upper arm plate 51 through a connecting pipe 53. An air feed tube 72, which will be described later, is fixed through a of supporting plate 55. Upper arm plate 51 is urged upward by a spring (not shown). When a solenoid 108 (not shown in Fig. 1), mounted within a raising-lowering drive portion 54, is energized, upper arm plate 51 is moved downward against the bias of the spring (refer to Fig. 4). Due to this downward moving of arm plate 51, supporting plate 55 , which is connected to arm plate 51 through the connecting pipe 53 also moves downward, and therefore liquid feed tube 22 and air feed tube 72 move downwards and reach their respective lower positions shown in Fig. 4. On the other hand, when solenoid 108 is deenergized, upper arm plate 51 is moved upward under the influence of the spring, so that supporting plate 55, liquid feed tube 22 and air feed tube 72 move upwards and reach their respective upper positions shown in Fig. 5.

As shown on an enlarged scale in Figs. 4-5, a liquid absorbing material 61, such as filter paper, is supported by a metal plate 62 and clips 63 mounted on the plate 62 between supporting plate 55 and the base 12. In the raised position of liquid feed tube 22 shown in Fig. 5, the distal end (liquid outlet port) 22a of tube 22 comes in contact with liquid absorbing material 61, and the eluate fed from the column 3, is absorbed by liquid absorbing material 61. On the other hand, in the lower position of liquid feed tube 22 shown in Fig. 4, the distal end 22a of tube 22 projects downwards toward filter paper 16, so that the eluate can be poured onto filter paper 16.

As shown by Fig. 1, arm plates 51 and 52, supporting plate 55 and raising-lowering drive portion 54 and other members which support liquid feed tube 22 upward-downward movably, are mounted on a second nut block 45. This nut block 45 is threaded on a second feed screw 42 which is rotatably supported on bearings 43 and 44, and can be driven or rotated by a second motor 41. Therefore, nut block 45 can be moved in right and left directions (directions of arrows C and D perpendicular to the slits 14a, 14b). These moving means 41 to 45 (second moving means), including second nut block 45, are mounted on a movable frame 36 which is movable in forward and backward directions (directions of arrows A and B) parallel to slits 14 in the base.

As also shown by Fig. 1, guide rails 65a and 65b are mounted respectively on upper edge portions of opposite (right and left) side plates 18a and 18b of the device housing 18. Guide slits 66a and 66b are formed respectively through those portions of opposite side plates 18a and 18b disposed respectively immediately below guide rails 65a and 65b. On the other hand, movable frame 36 has leg portions 36a and 36b extending downwardly to be disposed adjacent respectively to the opposite side plates 18a and 18b of the housing. Guide rollers (not shown) are mounted respectively on inner surfaces of leg portions 36a and 36b, and are engaged respectively with the guide rails 65a and 65b, so that movable frame 36 can be moved forward and backward relative to housing 18. A guide rod 35 extends between the two leg portions 36a and 36b through the housing 18, and this guide rod 35 passes through guide slits 66a and 66b so as to slide along these guide slits. A first nut block 33 is fixedly mounted on the rod 35 intermediate opposite ends thereof.

First nut block 33 is threaded on a first feed screw 32, and this feed screw 32 is driven or rotated by a first motor 31 mounted within the housing 18. Therefore, when first feed screw 32 is rotated by the first motor 31, first nut block 33 is moved forward and backward (in the directions of arrows A and B), so that movable frame 36 is moved along the base slits 14. Therefore, liquid outlet port 22a can move forward, backward, right and left above base 12. In this embodiment, each of the first and second motors 31 and 41 comprises a stepping motor. In Fig. 1, reference numeral 34 denotes a bearing for the first feed screw 32.

As shown by Fig. 1, collecting device 11 further comprises an air pump 71 for blowing air to that portion of filter paper 16 on which the eluate has been collected. As shown in Fig. 4, air, supplied from pump 71, is led via air feed tube 72 to a position disposed immediately near of liquid outlet port 22a. The distal end of air feed tube 72 is cut diagonally so that air is fed toward liquid outlet port 22a. The distal end of air feed tube 72 is thus disposed near of liquid outlet port 22a, and with this arrangement, air can be immediately blown onto that portion of the filter paper onto which the eluate is poured, thereby drying these portions. The collecting portions (that is, those portions of the filter paper facing the slits 14) are supported in a floating manner in the air as described above, and therefore the air blown passes through the filter paper to the lower side, and this further promotes drying of the eluate.

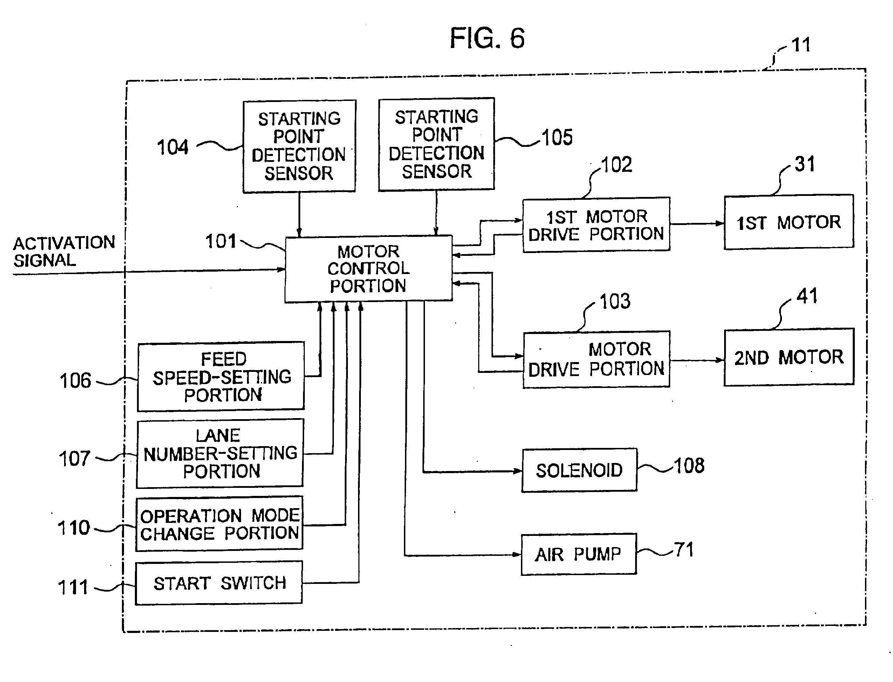

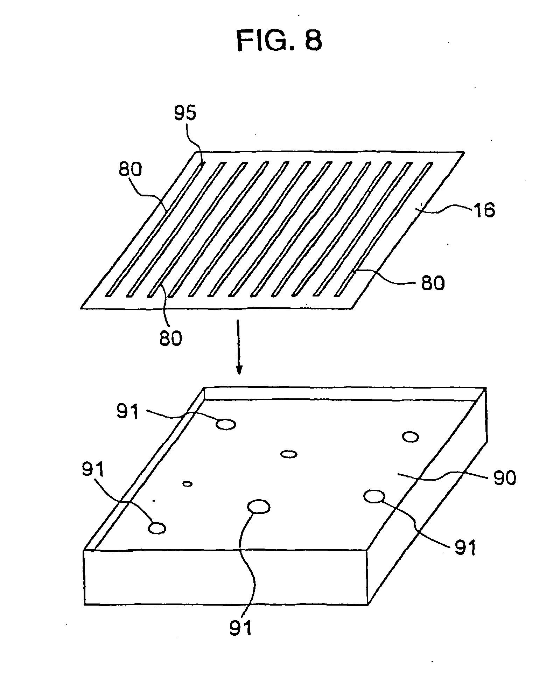

Fig. 6 is a block diagram of one example of a control portion for the first and second motors 31 and 41. As shown by this Figure, collecting device 11 of this embodiment includes a motor control portion 101 for effecting a feed operation (described later) of liquid outlet port, a first motor drive portion 102, a second motor drive portion 103, starting point detection sensors 104 and 105 for detecting the arrival of liquid outlet port at a collection starting position (i.e., an initial position or origin 95 shown in Figs. 1 and 8) with respect to the forward-backward direction (in the direction of the length of the base slits 14) and the right-left direction (perpendicular to the base slits 14). Collecting device 11 further includes a feed speed-setting portion 106 for setting the speed of movement of liquid outlet port 22a by first motor 31, and a lane number-setting portion 107 for setting the number of base slits 14 to be used for collecting eluate.

Each of the first and second motor drive portions 102 and 103 includes a pulse generating circuit and a driver circuit (both of which are not shown) for driving motors 31, 41, and in accordance with a control signal from motor control portion 101, a predetermined number of drive pulses are outputted to motors 31 and 41 to rotate motors 31, 41 in a predetermined amount so as to move liquid outlet port 22a, and also to switch the rotation of motors 31, 41 between a normal direction and a reverse direction. For example, the starting point detection sensor 104 can comprise a limit switch (not shown in Fig. 1) for detecting the arrival of first nut block 33 at a predetermined position near to bearing 34. Similarly, the starting point detection sensor 105 can comprise a limit switch for detecting the arrival of second nut block 45 at a predetermined position near to bearing 43. In this embodiment, feed speed-setting portion 106 comprises a change-over switch which can set any one of three predetermined speeds.

The operation of collecting device 11 will be now be described.
(1) When an activating signal from the system controller 7 of the HPLC apparatus is inputted to the motor control portion 101 of collecting device 11, motor control portion 101 drives motors 31 and 41 through the first and second motor drive portions 102 and 103 so as to locate liquid outlet port 22a at the collection starting position 95. The driving of motors 31, 41 is stopped when a starting point detection signal is fed from the starting point detection sensors 104, 105.
(2) In response to this starting point detection signal, motor control portion 101 outputs driving signals respectively to solenoid 108, air pump 71 and first motor drive portion 102. As a result, upper arm plate 51 (and hence liquid feed tube 22) moves downward, and liquid outlet port 22a for discharging the eluate is exposed to face filter paper 16, and the eluate begins to be poured onto filter paper 16. At the same time, first motor 31 is driven by first motor drive portion 102, so that liquid outlet port 22a begins to move forward (in the direction of arrow A) along the slit 14a of base plate 12a. Also, air pump 71 begins to be operated, so that air is blown onto filter paper 16. Liquid outlet port 22a is moved at the predetermined, constant speed selected beforehand by feed speed-setting portion (changeover switch) 106, and the eluate is collected in the form of a line on that portion of filter paper 16 facing the base slit 14.
(3) When a predetermined number of pulses are outputted from the first motor drive portion 102 to first motor 31, first motor 31 is stopped, and first motor drive portion 102 outputs a drive completion signal to the motor control portion 101. In this condition, liquid outlet port 22a has been moved to a front end position 96 of base slits 14a. In accordance with the drive completion signal from first motor drive portion 102, motor control portion 101 deenergizes solenoid 108, so that upper arm plate 51 moves upward, and therefore liquid outlet port 22a comes in contact with liquid absorbing material 61.
(4) Then, motor control portion 101 outputs a reverse drive signal to first motor drive portion 102, and in accordance with this control signal, first motor drive portion 102 drives first motor 31 in the reverse direction, and liquid outlet port 22a is returned (in the direction of arrow B) to the origin position 95 at the proximal end slit 14a of base plate 12a. This reverse movement is effected by sending to first motor 31 a pulse signal (the direction of current is reverse) of pulses equal in number to the drive pulses applied for moving liquid outlet port 22a in the direction of arrow A. During the returning movement of liquid outlet port 22a, the eluate is absorbed in liquid absorbing material 61, and will not be poured onto filter paper 16. Also, air is again blown onto that portion of filter paper (facing slit 14a) on which the eluate has been collected, and therefore drying of collected eluate is further promoted.
(5) After first motor drive portion 102 sends the above reverse drive pulses (In this condition, liquid outlet port 22a is located at the origin position 95), first motor drive portion 102 outputs a drive completion signal to motor control portion 101. In accordance with this drive completion signal, motor control portion 101 outputs a drive signal to second motor drive portion 103. In accordance with this drive signal, second motor drive portion 103 outputs a predetermined number of pulses to second motor 41 so as to drive this motor 41, thereby moving liquid outlet port 22a to an adjoining slit 14b.
(6) After second motor drive portion 103 sends the predetermined number of pulses, it sends a drive completion signal to motor control portion 101. In accordance with this signal, motor control portion 101 energizes solenoid 108, so that liquid outlet port 22a is moved downward, and pouring of eluate onto filter paper 16 is resumed. At the same time, motor control portion 101 drives first motor 31 (in the normal direction) through first motor drive portion 102, so that liquid outlet port 22a is moved forward (in the direction of arrow A) along slit 14b .

By repeating the above driving and control of motors 31 and 41 (so as to feed liquid outlet port 22a), eluate can be collected in the form of parallel lines 80 on filter paper 16 as shown in Fig. 8. The number of lines 80 of collected eluate can be arbitrarily set to a desired number (in the range of between 1 to 12 since the number of slits is 12 in this embodiment) by lane number-setting portion 107. Motor control portion 101 has a counter (not shown) for counting the frequency of inputting of the drive completion signal thereinto from second motor drive portion 103, and the feeding (movement) of liquid outlet port 22a is continued until this count value reaches the value set by lane number-setting portion 107.

The above described embodiment of eluate collecting device 11 further includes a changeover switch 110 for changing the operation modes. By operating this switch 110, the manual operation mode can be selected instead of the above feed control (automatic operation mode). Namely, in the above automatic operation mode, in response to the activation signal from system controller 7, liquid outlet port 22a is automatically moved in accordance with the number of slits selected by lane number-setting portion 107. On the other hand, in the case where the manual operation mode is selected, the feeding of liquid outlet port 22a is started when the operator operates a start switch 111, and liquid outlet port 22a is fed only for one slit 14a.

For example, in order to detect the ingredients (solute) contained in the sample, filter paper 16, having eluate collected thereon, is placed on a culture medium 90 represented in Fig. 8, in which a predetermined test microorganism (e.g. cell, animal cell or plant cell and so on) can grow, and the test microorganism is subjected to stationary culture under suitable conditions (temperature, a time period and so on). Filter paper 16, while collecting eluate, is dried by air supplied from air pump 71, so that at the time when the collection is finished, filter paper 16 is already in a dried condition (or a substantially-dried condition). Therefore, this filter paper 16 can be immediately placed on the culture medium, and the cumbersome processing, required in the conventional method, such as dropping of the separation solution from the fraction onto the filter paper disk, and drying of the filter paper disk, can be omitted. If any material, having a physiologic activity for the test microorganism, is contained in the sample, its presence can be detected through the generation of growth inhibition spots 91 or the change of the form or the shape of the liquid receiving means (e.g. the change of the form or the shape of cell, nerve cell or neuron etc. on the liquid receiving means, wandering of the microorganism, cell proliferation or cell proliferation inhibiting). Also, by measuring the diameter of the spots 91, a quantitative estimation of this active material can be effected.

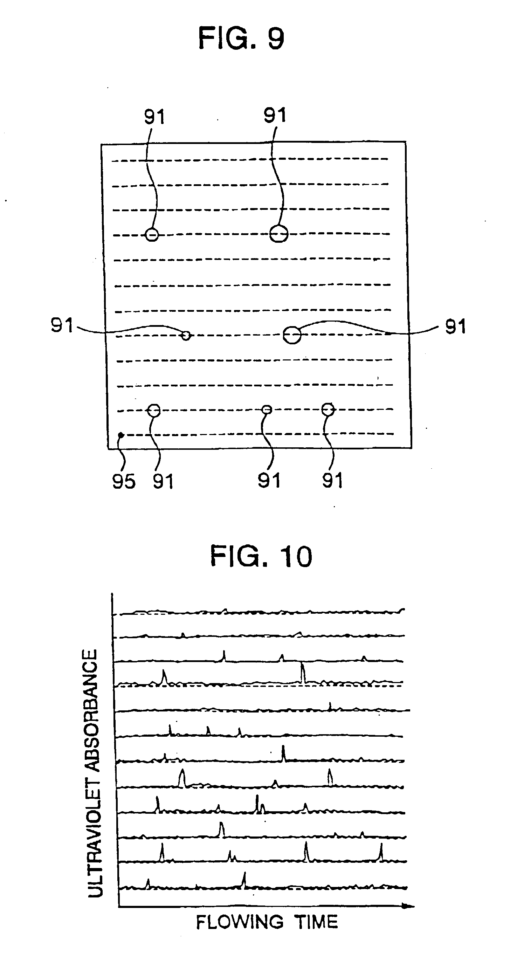

Since liquid outlet spot 22a is moved at a constant speed, the distance from the collection starting position 95 to each spot 91 is in corresponding relation to the point of time at which the eluate flows out from column 3. Therefore, as shown in Figs. 9-10, active spots 91 (Fig. 9) are superimposed on detection data (Fig. 10) of the UV monitor 4, and by doing so, the active material can be identified on the basis of ultraviolet absorbance. Alternatively, the active material is refined from the corresponding fraction (i.e., the fraction eluted at the same time), and this active material can be identified by other analytical method.

In a conventional automatic processing apparatus, output data from the ultraviolet / visible absorption detector and the mass spectrograph may be processed and then the detecting result may be automatically recorded by a recorder such as a printer plotter. However, such conventional apparatus needs a large computer and a large program for data processing and hence the system becomes large-scale. On the other hand, in the present invention, the automatically control can be achieved by an smaller, dedicated controller, and therefore the detecting system can be built more compactly. Further, liquid outlet port (22a) can be moved at a very low speed by using a suitable stepping motor. Therefore, the ingredients contained in the sample solution can be certainly detected even when the speed with which the eluate emerges from the column is very low or the amount of eluate is very small.

The present invention is not limited to the above embodiment, but various modifications of the constituent portions of the eluate collecting device can be made. For example, in the above embodiment, although stepping motors 31 and 41 are used for feeding or moving liquid outlet port 22a accurately, any other suitable motors, such as a servo motor, can be used. In the above embodiment, although feed screws 32 and 42 and nut blocks 33 and 45, threaded respectively on these feed screws, are used as feed mechanisms, liquid outlet port 22a can be moved by any other suitable feed mechanisms each comprising e.g. gears and a chain.

In the above embodiment, although the number of base slits 14 (the number of the lines of collected eluate) is 12, it may be less (1 to 11) or more (13 or more) than 12. A method can be used in which an eluate of one sample is collected on one filter paper, and then an eluate of another sample is collected on this filter paper.

The direction of movement of liquid outlet port 22a during the collection of the eluate can be changed. In the above embodiment, although the eluate is collected while moving liquid outlet port 22a toward the distal end of the base (that is, in the direction of arrow A), but the eluate may also be collected while moving liquid outlet port 22a in the opposite direction (the direction of arrow B). Alternatively, there can be used a method in which liquid outlet port 22a is fed forward (that is, in the direction of arrow A) while pouring the eluate, and then liquid outlet port 22a is shifted to the adjoining slit at the front end of the slit, and then liquid outlet port 22a is returned toward the rear end of the slit (that is, in the direction of arrow B) while collecting the eluate on the filter paper. Furthermore, in this embodiment, although liquid outlet port 22a for pouring the eluate is moved, but instead of this the sheet (the filter paper) for receiving the eluate can be moved, in which case, also, the aim of the present invention is also be achieved.

With the device of the above embodiment, a method can be used in which after a predetermined number of lines of eluate are collected, the filter paper 16 is displaced of a predetermined amount (e.g. 1/2 of the interval between the slits) from its initial position, and the eluate is further collected on the area between the lines 80 of collected eluate. By doing so, the eluate can be collected on the filter paper in a larger amount (e.g. 24 (12×2) lines) for a longer time.

The construction of the liquid chromatograph, to which the collecting device 11 is connected, is not limited to the construction shown in Fig. 7. For example, instead of or in addition to the UV monitor 4 and the LC-MS6, other detection devices (e.g. an infrared absorption detector, a fluorescence detector and etc.) may be connected to the liquid chromatograph. Furthermore, as described above, a method can be used in which an ultraviolet ray is applied directly to the filter paper, and the intensity of this ray is recorded through a phototube or a photocell. By doing so, the detection and quantitative determination of the ingredients of the sample can be effected directly from the filter paper having the eluate collected thereon.

With respect to the separation mode in the column 3, generally, an opposite-phase chromatography is used in the HPLC in many cases, but a normal phase chromatography may be used instead. With regard to the kind of filling material (stationary phase) a suitable one is selected depending on the target material to be detected.

## Claims

1. An eluate collecting device (11) for pouring an eluate emerging from a chromatographic column capable of developing a sample solution onto a liquid receiving means (16) and for collecting said eluate, said device comprising
a base (12) for supporting said liquid receiving means (16),
liquid outlet forming means for forming a liquid outlet (22a) above said base, through which said eluate being poured down towards said liquid receiving means,
moving means (31-37, 41-44) for moving said liquid outlet (22a) relative to said liquid receiving means (16), and
control means for moving said eluate outlet relative to said liquid receiving means (16) at a predetermined speed by use of said moving means so as to vary the eluate outlet position relative to said liquid receiving means.

2. An eluate collecting device according to claim 1, wherein said moving means includes
first moving means (31-34) capable of moving said liquid outlet (22a) in a first direction along said base (12) and
second moving means (41-44) capable of moving said liquid outlet in a second direction perpendicular to the first direction, and
said controlling means
firstly moves said liquid outlet (22a) in the first direction by use of the first moving means at a predetermined speed,
secondly moves said liquid outlet (22a) in the second direction by a predetermined distance by use of the second moving means, and
thirdly moves again said liquid outlet (22a) in the first direction at a predetermined speed by use of the first moving means.

3. An eluate collecting device according to claim 2, wherein said base includes
a base plate (12a) formed with a plurality of slits (14a) arranged in parallel to the first direction with suitable intervals among them and
a pressing plate (12b) formed with a plurality of slits (14b) corresponding to said slits (14a) in said base plate (12a), thereby holding said liquid receiving means (16), and
said first moving means is capable of moving said liquid outlet (22a) along the slits (14a) in the base plate (12a).

4. An eluate collecting device according to claim 2 or 3, further comprising
raising and lowering means (51) capable of raising or lowering the liquid outlet (22a) from or towards the base (12), and
liquid absorbing means (61) for absorbing the eluate while locating the liquid outlet at an upper position separated from the base (12),
said liquid absorbing means (61) being capable of absorbing an eluate during the time the liquid outlet (22a) is being moved in the second direction by use of said second moving means (41-44) while located at an upper position by use of said raising and lowering means (51).

5. An eluate collecting device according to one of claims 1 to 4, further comprising an air blow means (71) for blowing air onto a portion of the liquid receiving means (16) where an eluate has been collected.

6. A liquid chromatograph, comprising
a chromatographic column (3) filled with a stationary phase capable of developing a sample solution,
a sample solution injecting device (2) for injecting a sample solution into said column (3),
detectors (4, 6)for detecting ingredients contained in the eluate flowing out from the column, and
an eluate collecting device (11) recited in any one of claims 1 to 5,
the eluate flowing out from the column being successively poured and collected (80) onto liquid receiving means (16) while the collecting position is modified in function of time.

7. A material detecting method using a liquid chromatography, said method comprising
injecting a sample solution into a stationary phase,
successively pouring and collecting an eluate emerging from the stationary phase onto a liquid receiving means while the collecting position is modified in function of time, and
detecting ingredients contained in the sample solution on the basis of an eluate collected on said liquid receiving means.

8. A material detecting method according to claim 7, wherein said liquid receiving means for collecting an eluate is put on a culture medium (90) in which a predetermined test microorganism can grow, thereby detecting a target material contained in the sample solution based on the activity of growth-inhibition (91) against a test germ.
